# EUROPÄISCHE PATENTSCHRIFT

(11) **EP 3 565 727 B1**
(45) Veröffentlichungstag und Bekanntmachung des Hinweises auf die Patenterteilung: **07.04.2021**
(21) Anmeldenummer: 18796859.9
(22) Anmeldetag: 23.10.2018
(51) Int. Cl.: B60J 7/057

(54) **RAHMEN EINES FAHRZEUGDACHS MIT KABELFÜHRUNGSELEMENT**
FRAME OF A VEHICLE ROOF HAVING A CABLE-GUIDE ELEMENT
CADRE DE TOIT DE VÉHICULE, DOTÉ D'UN ÉLÉMENT DE GUIDAGE DE CÂBLE

(30) Priorität: 28.11.2017 DE 102017128133; 28.05.2018 DE 102018112725
(43) Veröffentlichungstag der Anmeldung: 13.11.2019
(73) Patentinhaber: Webasto SE, 82131 Stockdorf (DE)
(72) Erfinder: KALKBRENNER, Gabriel, 82131 Stockdorf (DE); REIHL, Peter, 82131 Stockdorf (DE); WEIDERER, Thomas, 82131 Stockdorf (DE)
(74) Vertreter: advotec.
(86) Internationale Anmeldenummer: PCT/EP2018/078958
(87) Internationale Veröffentlichungsnummer: WO 2019/105653

(56) Entgegenhaltungen:
- EP-A1- 2 072 303
- EP-A1- 2 826 651
- US-A- 5 188 420

## Beschreibung

Die Erfindung betrifft einen Rahmen eines Fahrzeugdachs mit den Merkmalen des Oberbegriffs des Patentanspruchs 1. Ein Rahmen eines Fahrzeugdachs ist in EP 2 072 303 A1 offenbart.

Ein derartiger Rahmen ist aus der Praxis bekannt und Bestandteil eines Dachöffnungssystems, das einen Schiebedachdeckel umfasst, der zwischen einer eine Dachöffnung verschließenden Schließstellung und einer die Dachöffnung zumindest teilweise freigebenden Öffnungsstellung verstellbar ist. Der Rahmen umfasst in der Regel ein Rahmenvorderteil, das sich in Dachquerrichtung erstreckt und zwei sich in Dachlängsrichtung erstreckende Längsschenkel, die jeweils eine Führungsschiene für eine Antriebskinematik des Schiebedachdeckels bilden. Die Führungsschienen bzw. Längsschenkel können an ihren bugseitigen bzw. vorderen Enden jeweils ein Endstück aufweisen, das eine Anhebekulisse bildet, mittels derer ein vorderer Rand des Schiebedachdeckels bei dessen Verstellen angehoben bzw. abgesenkt werden kann, und das die Schnittstelle zwischen dem betreffenden Längsschenkel und dem Rahmenvorderteil bildet. Im Bereich des Rahmenvorderteils ist ein Antriebsmotor angeordnet, der zum Antrieb des Schiebedachdeckels zwei Antriebskabel antreibt, die jeweils in einer Kabelkanalanordnung zu den in den Führungsschienen verfahrbaren Kinematiken geführt sind. Die Kabelkanalanordnungen für die Antriebskabel umfassen jeweils einen in dem Rahmenvorderteil ausgebildeten Kabelkanal, einen in dem Endstück mit der Anhebekulisse ausgebildeten Kabelkanal und einen Kabelkanal, der in einem Führungsabschnitt der jeweiligen Führungsschiene ausgebildet ist, der aus einem Aluminiumstrangpressprofil bestehen kann. Das Rahmenvorderteil und die Endstücke können jeweils ein Spritzgieß-Kunststoffformteil sein. Die in diesen Bauelementen ausgebildeten Kabelkanäle können entlang ihrer Erstreckung so ausgebildet sein, dass erste und zweite Wandabschnitte das betreffende Antriebskabel wechselweise von zwei Seiten umgreifen, so dass das Antriebskabel an seiner dem jeweiligen Wandabschnitt abgewandten Seite durch einen betreffenden Freischnitt freiliegt.

In einer Unfallsituation, in der der Schiebedachdeckel seine Öffnungsstellung einnimmt und eine Beschleunigung in Fahrzeugbugrichtung erfährt, werden die Beschleunigungskräfte über die Antriebskinematiken auf die Antriebskabel übertragen. Wenn die Freischnitte der alternierenden Kabelführungen bzw. Kabelkanäle in Längsrichtung des jeweiligen Kabelkanals eine Länge von mehr als etwa 10 mm haben, besteht das Risiko, dass die Antriebskabel durch die Freischnitte aufgrund der von dem Schiebedachdeckel eingeleiteten Kräfte im Wesentlichen ungebremst ausschlaufen. Damit würden keine Bremskräfte auf den Schiebedachdeckel ausgeübt. Wenn aber die Freischnitte in Längsrichtung des betreffenden Kabelkanals kürzer sind als etwa 8 mm und damit ein Ausschlaufen des betreffenden Antriebskabels verhindert wird, besteht das Problem, dass die von dem Schiebedachdeckel ausgeübten Kräfte unmittelbar auf alle im Kraftfluss liegenden Bauteile übertragen werden, was wiederum zu einem Bauteilversagen führen kann.

Der Erfindung liegt die Aufgabe zugrunde, einen Rahmen der einleitend genannten Gattung zu schaffen, der ein gezieltes Abbauen von durch einen Schiebedachdeckel eingeleiteten Beschleunigungskräften in einer Unfallsituation des betreffenden Fahrzeugs ermöglicht.

Diese Aufgabe ist erfindungsgemäß durch den Rahmen mit den Merkmalen des Patentanspruchs 1 gelöst.

Gemäß der Erfindung ist das den Kabelkanal aufweisende Kabelführungselement des Rahmens mit einer definierten Öffnung versehen, deren Länge so gewählt ist, dass das in dem Kabelkanal geführte Antriebskabel gezielt ausgeschlauft werden kann, d. h. seitlich aus dem Kabelkanal austreten kann, wenn in axialer Richtung des Antriebskabels Kräfte wirken, die einen Grenzwert überschreiten.

Das gezielte Ausschlaufen des Antriebskabels durch den Ausschlauffreischnitt bewirkt, dass beispielsweise in einer Unfallsituation etwaige in das betreffende Antriebskabel eingeleitete kinematische Energie kontinuierlich abgebaut wird. Nach dem Ausschlaufen und dem etwaigen Anschlagen des ausgeschlauften Kabelbereichs an einer Anschlagfläche, die von dem Kabelführungselement, in dem der Kabelkanal ausgebildet ist, oder auch von einem anderen Fahrzeugteil gebildet sein kann, sperrt das Antriebskabel ein weiteres Verfahren des Schiebedachdeckels. Durch den gezielten kontinuierlichen Abbau der kinematischen Energie kann die Kanalwand des Kabelkanals des betreffenden Kabelführungselements oder auch eines anderen Kabelführungselements, in dem das betreffende Antriebskabel geführt ist, vor einer Überlastung und damit auch vor einer Beschädigung geschützt werden.

Die Ausschlaufgrenzlänge ist die Länge, ab der das Antriebskabel technisch bedingt überhaupt durch den Ausschlauffreischnitt ausschlaufen kann.

Bei der Ausführungsform des Rahmens nach der Erfindung hat der Ausschlauffreischnitt in Axialrichtung des Kabelkanals eine Länge, die geringer ist als eine kritische Ausschlauflänge. Die kritische Ausschlauflänge ist die Länge eines Freischnitts, ab der das Antriebskabel im Wesentlichen ungebremst durch den betreffenden Freischnitt ausschlaufen kann. Bei einem Kabeldurchmesser von etwa 5,0 mm bis 5,5 mm beträgt die kritische Ausschlauflänge etwa 9,5 mm bis 10,5 mm und insbesondere etwa 10 mm.

Die Ausschlaufgrenzlänge, unterhalb derer ein Ausschlaufen des Antriebskabels im Wesentlichen ausgeschlossen ist, beträgt bei einem Antriebskabel mit einem Durchmesser von etwa 5,0 mm bis 5,5 mm etwa 7, 5 mm bis 8,5 mm und insbesondere etwa 8,0 mm.

Der Kabelkanal hat vorzugsweise einen Durchmesser, der mit dem Durchmesser des Antriebskabels korrespondiert und insbesondere bei einer Projektion in Kabellängsrichtung bzw. entlang der Kabelkanalachse einen Durchmesser von etwa 5,0 mm bis 5,5 mm hat.

Das Antriebskabel ist beispielsweise ein Steigungskabel mit einer Drahtumwicklung oder auch ein Kunststoffkabel.

Um beim Ausschlaufen des Antriebskabels durch den Ausschlauffreischnitt eine gezielte Gegenkraft auf das Antriebskabel ausüben zu können, schließt sich bei einer bevorzugten Ausführungsform des Rahmens nach der Erfindung an den Ausschlauffreischnitt ein Dämpftrichter an, dessen Querschnittsfläche sich ausgehend von dem Ausschlauffreischnitt verkleinert. Der Dämpftrichter nimmt den ausgeschlauften Bereich des Antriebskabels auf. Der ausgeschlaufte Bereich liegt an Seitenwänden des Dämpftrichters an, die ausgehend von dem Ausschlauffreischnitt aufeinander zulaufen, wodurch eine kontinuierlich steigende Gegenkraft auf das Antriebskabel beim Ausschlaufen desselben ausgeübt wird. Die Gegenkraft sollte stets kleiner sein als die Kräfte, die zu einem Versagen bzw. einer Beschädigung der Mechanik führen würden.

Das Kabelführungselement, das mit dem erfindungsgemäß ausgebildeten Kabelkanal versehen ist, kann eine Führungsschiene, in der eine Antriebsmechanik eines Dachöffnungssystems geführt ist, ein an eine Führungsschiene angebundenes Kulissenelement, ein Rahmenquerteil, insbesondere ein Rahmenvorderteil oder ein Rahmenhinterteil, ein Rahmenlängsteil oder auch ein in den Rahmen integriertes Führungsrohr sein.

Gemäß einer speziellen Ausführungsform wird ein Rahmen mit einem Kabelführungselement vorgeschlagen, das einen Kabelkanal aufweist, der durch die wechselweise in Kanallängsrichtung hintereinander angeordneten ersten und zweiten Wandabschnitte eine alternierende Kabelführung bildet und der genau einen Freischnitt aufweist, der ein so genannter Ausschlauffreischnitt ist, durch welchen ein Ausschlaufen des in dem Kabelkanal geführten Antriebskabels in Folge von axial wirkenden großen Kräften möglich ist. Die weiteren Freischnitte des Kabelkanals haben eine geringere Länge in Axialrichtung, so dass ein Ausschlaufen durch diese Freischnitte ausgeschlossen ist.

Bei einer weiteren speziellen Ausführungsform des Rahmens nach der Erfindung, bei der das Kabelführungselement eine Führungsschiene ist, ist diese ein Profil, in dem der Kabelkanal ausgebildet ist, wobei die Kanalwand mit dem Ausschlauffreischnitt von einer sich in Führungsschienenlängsrichtung erstreckenden Rippe der Führungsschiene gebildet ist und der Ausschlauffreischnitt durch eine Ausnehmung der Rippe gebildet ist. Bei dieser Ausführungsform erfolgt mithin der Abbau der in das betreffende Antriebskabel eingeleiteten kinematischen Energie schon im Bereich der Führungsschiene, in der die Kinematik des betreffenden beweglichen Dachelements geführt ist.

Damit werden auch Kabelführungselemente, die der Führungsschiene nachgeschaltet sind, beispielsweise ein Rahmenquerteil oder dergleichen wirkungsvoll vor einer Überlastung geschützt. Ein Antriebsschlitten, der in der betreffenden Führungsschiene geführt ist, setzt sich nach dem Ausschlaufen des Antriebskabels durch den Ausschlauffreischnitt in Bewegung und wird spätestens dann gestoppt, wenn er die Position des Ausschlauffreischnitts erreicht hat.

Da ein Schiebedachdeckel in der Regel ausgehend von einer Öffnungsstellung in Richtung Fahrzeugbug in eine Schließstellung verlagert wird, ist bei einer speziellen Ausführungsform des Rahmens nach der Erfindung die Ausnehmung der Rippe im Bereich einer bugseitigen Hälfte, insbesondere eines bugseitigen Drittels der Führungsschiene angeordnet. Damit wird der Schiebedachdeckel nach einer insbesondere in einer Unfallsituation vorliegenden hohen Beschleunigung beim Verfahren in Richtung Fahrzeugbug wirkungsvoll abgebremst, bis er im Bereich der Ausnehmung der Rippe zum Stehen kommt.

Die Führungsschiene ist vorzugsweise als Aluminiumstrangpressprofil ausgebildet, wobei dann der Ausschlauffreischnitt durch eine Ausfräsung der betreffenden Rippe gebildet ist.

Der Rahmen nach der Erfindung kann ein Rahmen eines Dachöffnungssystems oder ein Rahmen eines Beschattungssystems des Fahrzeugdachs sein, kann aber auch ein Rahmen sein, der beiden Systemen zugeordnet ist. Zudem kann der Rahmen offen ausgebildet sein, das heißt er kann aus nur zwei Rahmenlängsteilen bestehen, die über ein Rahmenquerteil verbunden sind. Das Rahmenquerteil kann allein aus Führungsrohren bestehen, die das Antriebskabel zu den Rahmenlängsteilen führen, welche mit dem erfindungsgemäß ausgebildeten Kabelführungselement versehen sind.

Weitere Vorteile und vorteilhafte Ausgestaltungen des Gegenstandes der Erfindung sind der Beschreibung, der Zeichnung und den Patentansprüchen entnehmbar.

Ausführungsbeispiele eines Rahmens nach der Erfindung ist in der Zeichnung schematisch vereinfacht dargestellt und wird in der nachfolgenden Beschreibung näher erläutert. Es zeigt:
- Figur 1: eine Draufsicht auf ein Fahrzeugdach mit einem Dachöffnungssystem und einem Rahmen desselben;
- Figur 2: eine perspektivische Innenansicht eines Seitenholms des Rahmens;
- Figur 3: eine perspektivische Außenansicht des Seitenholms;
- Figur 4: eine perspektivische Unteransicht eines bugseitigen Kulissenelements des Seitenholms;
- Figur 5: eine perspektivische Schnittdarstellung des Kulissenelements entlang der Linie V-V in Figur 4;
- Figur 6: eine Schnittdarstellung durch das Kulissenelement entlang der Linie VI-VI in Figur 4;
- Figur 7: einen schematische Längsschnitt durch eine Führungsschiene mit einem Ausschlauffreischnitt; und
- Figur 8: einen Querschnitt durch die Führungsschiene im Bereich des Ausschlauffreischnitts.

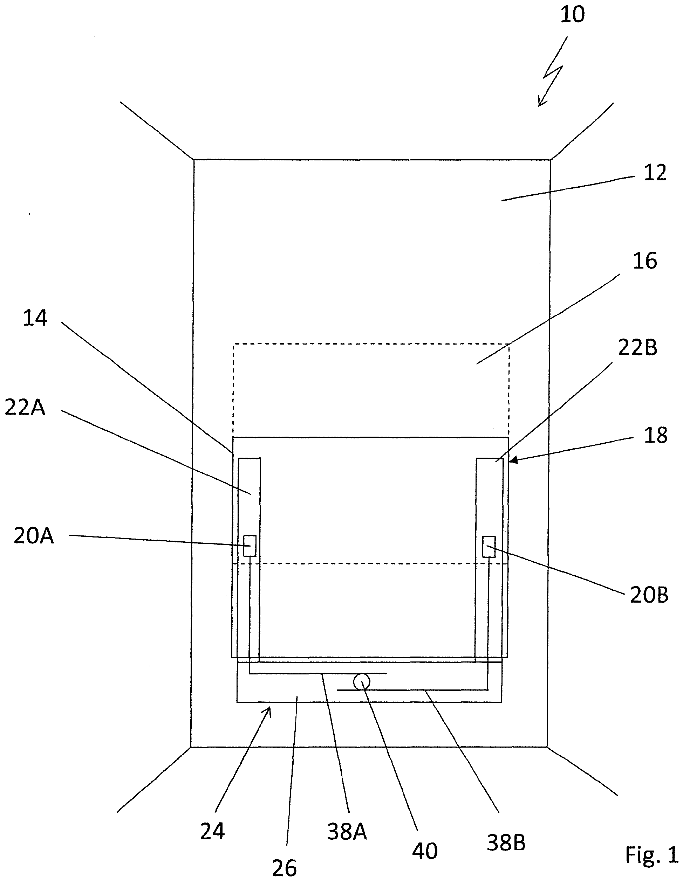

In Figur 1 ist ein Dach 10 eines als Personenkraftwagen ausgebildeten Kraftfahrzeugs dargestellt. Das Dach 10 umfasst einen Festdachabschnitt 12, in welchem eine Dachöffnung 14 ausgebildet ist, welche mittels eines Schiebedachdeckels 16 eines Dachöffnungssystems 18 wahlweise geschlossen oder zumindest teilweise freigegeben werden kann.

Der Schiebedachdeckel 16 des Dachöffnungssystems 18 ist bezogen auf eine vertikale Dachlängsmittelebene beidseits jeweils mit einer Verstellkinematik 20A bzw. 20B versehen, die in einer jeweiligen Führungsschiene 22A bzw. 22B geführt ist, die sich in Dach- bzw. Fahrzeuglängsrichtung erstreckt und entlang des jeweiligen seitlichen Randes der Dachöffnung 14 angeordnet ist.

Die Führungsschienen 22A und 22B sind Seitenholme eines Dachrahmens 24 und an ihren bugseitigen Enden über ein Rahmenvorderteil 26 miteinander verbunden, das ein sich in Dachquerrichtung erstreckendes Rahmenquerteil des Dachrahmens 24 bildet. Der Dachrahmen 24 ist bezogen auf eine vertikale Dachlängsmittelebene im Wesentlichen spiegelsymmetrisch ausgebildet, weswegen der Übersichtlichkeit halber die nachfolgende Beschreibung im Wesentlichen nur anhand der bezogen auf die Vorwärtsfahrtrichtung des betreffenden Fahrzeugs links angeordneten Führungsschiene 22B erfolgt. Die bezogen auf die Vorwärtsfahrtrichtung des betreffenden Fahrzeugs rechts angeordnete Führungsschiene 22A ergibt sich in analoger Weise aus der Beschreibung.

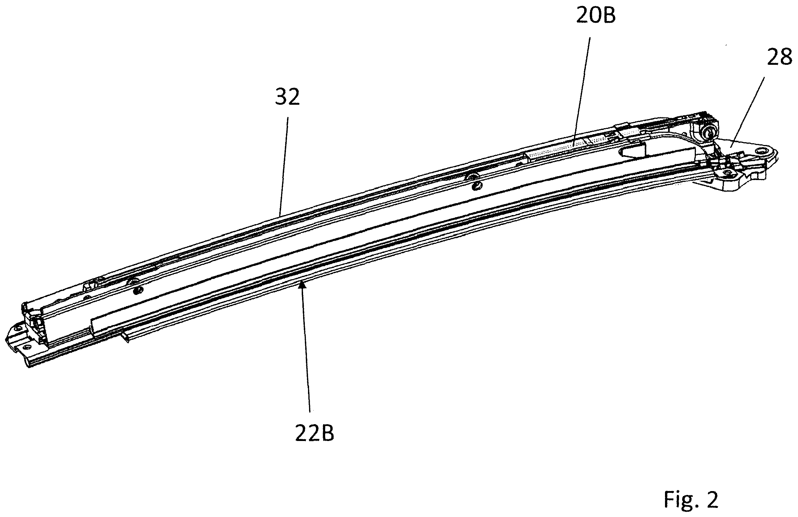

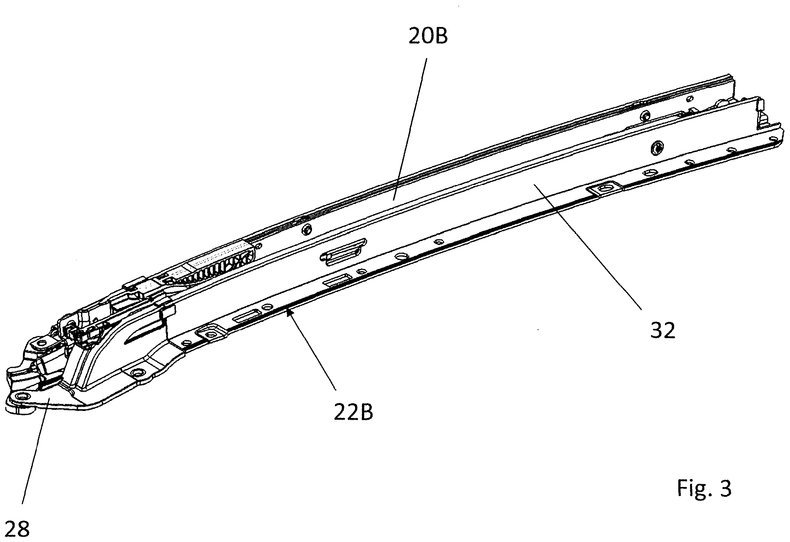

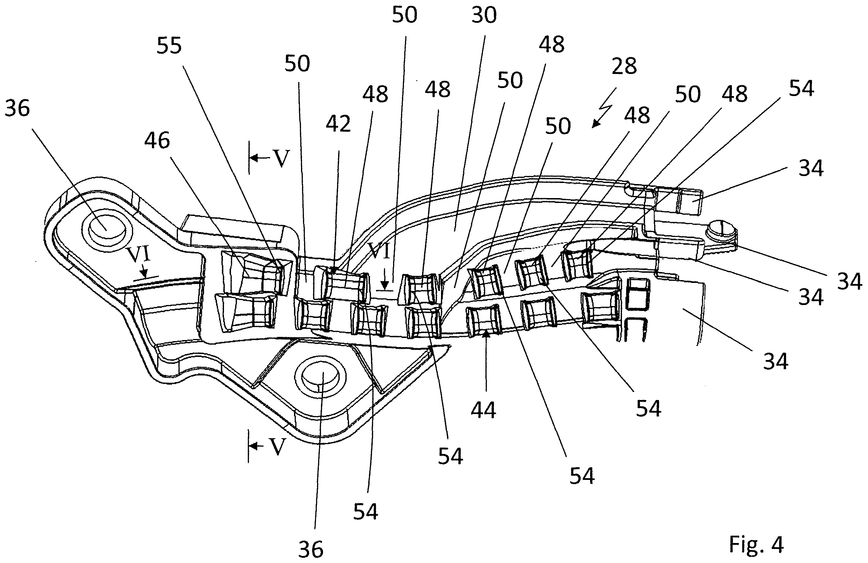

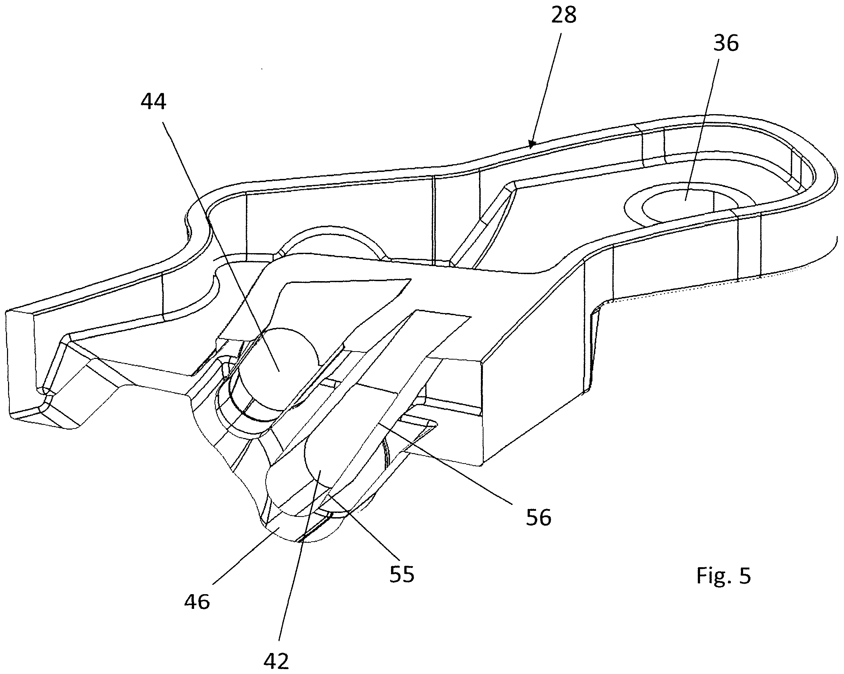

Wie den Figuren 2 und 3 zu entnehmen ist, hat die Führungsschiene 22B in ihrem Übergangsbereich zu dem Rahmenvorderteil 26 ein Endstück 28, welches in den Figuren 4 bis 6 in Alleinstellung dargestellt ist. Das Endstück 28, das als Spritzgieß-Kunststoffformteil ausgebildet ist, umfasst eine Anhebekulisse 30, in welcher beim Verstellen des Schiebedachdeckels 16 aus der Schließstellung in die Öffnungsstellung ein Gleiter geführt ist, so dass ein vorderer Rand des Schiebedachdeckels 16 gegenüber dem Festdachabschnitt 12 angehoben werden kann. Zur Fixierung des ein Kulissenteil darstellenden Endstücks 28 an einem Führungsabschnitt 32 der Führungsschiene 22B, der als Strangpressprofil aus Aluminium gefertigt ist, umfasst das Endstück 28 Rast- und Positionierlaschen 34. Um die Führungsschiene 22B mit dem Rahmenvorderteil 26 verbinden zu können, weist das Endstück 28 Schraubenöffnungen 36 auf.

Zum Antrieb der Verstellkinematiken 20A und 20B weist das Dachöffnungssystem 18 Antriebskabel 38A und 38B auf, welche mittels eines gemeinsamen Antriebsmotors 40 bzw. eines Ritzels desselben angetrieben sind. Die Antriebskabel 38A und 38B sind jeweils über eine Kabelführung in dem Rahmenvorderteil 26 in einen Kabelkanal 42 der Endstücke 28 und von dort in korrespondierende Kabelkanäle der Führungsabschnitte 32 der Führungsschienen 22A und 22B geführt und in den Führungsschienen 22A und 22B jeweils mit einem nicht näher dargestellten Antriebsschlitten der jeweiligen Verstellkinematik 20A bzw. 20B verbunden.

Durch die Ausbildung des Kabelkanals 42 stellt das Endstück 28, das nach einem Spritzgießprozess hergestellt ist, ein Kabelführungselement dar. Neben dem Kabelkanal 42 ist in dem Endstück zudem ein zweiter Kabelkanal 44 ausgebildet, welcher zur Führung eines Antriebskabels eines Beschattungssystems des Daches 10 dient.

Der Kabelkanal 42 stellt eine alternierende Kabelführung dar, welche durch erste Wandabschnitte 46 und 48, die den Kabelkanal 42 von einer ersten Seite begrenzen, und zweiten Wandabschnitten 50 gebildet, die den Kabelkanal 42 von einer zweiten Seite begrenzen. Dies führt dazu, dass das Antriebskabel 38B wechselweise von der ersten Seite mittels der ersten Wandabschnitte 46, 48 und von einer zweiten Seite mittels der zweiten Wandabschnitte 50 geführt ist. Die ersten Wandabschnitte 46 und 48 sind jeweils durch einen ersten Freischnitt 52 getrennt, der einem jeweiligen zweiten Wandabschnitt 50 gegenüberliegt. Die zweiten Wandabschnitte 50 sind jeweils durch einen zweiten Freischnitt 54 getrennt, der einem jeweiligen ersten Wandabschnitt 48 gegenüberliegt. Dem ersten Wandabschnitt 46 liegt ein Freischnitt 55 gegenüber, der einen zweiten Wandabschnitt 50 begrenzt.

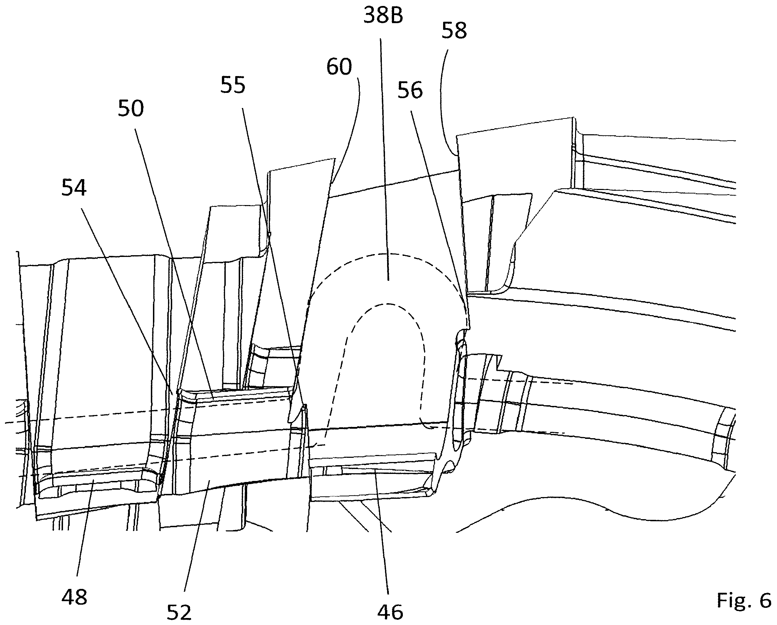

Der Freischnitt 55, der dem ersten Wandabschnitt 46 gegenüberliegt, hat eine Länge von etwa 9 mm. Die restlichen Freischnitte 52 und 54 haben in Längsrichtung des Kabelkanals 42 eine Länge von weniger als 8 mm. Damit hat der Freischnitt 54, der dem ersten Wandabschnitt 46 gegenüberliegt, eine Länge, die geringer ist als eine kritische Ausschlauflänge von etwa 10 mm, ab der das Antriebskabel 38B im Wesentlichen ungebremst durch den Freischnitt 54 ausschlaufen könnte. Gleichzeitig hat der dem ersten Wandabschnitt 46 gegenüberliegende Freischnitt 55 eine Länge, die geringer ist als eine Ausschlaufgrenzlänge von etwa 8,0 mm, unterhalb derer ein Ausschlaufen des Antriebskabels 38B in der in Figur 6 gestrichelt dargestellten Weise im Wesentlichen ausgeschlossen ist.

Das Antriebskabel 38B, das als drucksteifes Steigungskabel ausgebildet sein kann, hat einen Durchmesser von etwa 5,3 mm, der mit dem Durchmesser des Kabelkanals 42 korrespondiert, so dass auch der Kabelkanal 42 bei einer Projektion entlang der Kabelkanallängsachse einen Durchmesser von etwa 5,3 mm hat.

Bei einem Ausschlaufen des Kabelkanals 22B durch den dem ersten Wandabschnitt 46 gegenüberliegenden, einen Ausschlauffreischnitt bildenden Freischnitt 55 in der in Figur 6 dargestellten Weise, wird der ausschlaufende Teil des Antriebskabels 22B durch einen sich an den Freischnitt 55 anschließenden Dämpftrichter 56 gebremst, der durch aufeinander zulaufende Flächen 58 und 60 des Endstücks 28 gebildet ist. Damit kann erreicht werden, dass eine definierte Gegenkraft auf das Antriebskabel 38B ausgeübt wird, welche mit zunehmendem Ausschlaufen des Antriebskabels 38B durch den Freischnitt 55 steigt. Durch das so erfolgende gezielte Ausschlaufen des Antriebskabels 38B in den taschenartigen Dämpftrichter wird im Falle einer Kollision des betreffenden Fahrzeugs kinematische Energie, die von dem hierdurch beschleunigten Schiebedachdeckel 16 auf das Antriebskabel 38B übertragen wird, kontinuierlich abgebaut. Bei Erreichen eines bestimmten Ausschlaufbetrags erfolgt durch den Dämpftrichter 56 ein Blockieren des Antriebskabels 38B, wodurch auch ein weiteres Verfahren des insbesondere als Glasdeckel ausgebildeten Schiebedachdeckels gesperrt ist. Durch das Ausschlaufen des Antriebskabels 38B können andere Bauteile des Dachöffnungssystems 18, insbesondere auch die Wandabschnitte 46, 48 und 50 des Kabelkanals 42 vor einer Überlastung und damit vor einer Beschädigung geschützt werden. Die von dem Dämpftrichter 56 ausgeübte Gegenkraft sollte stets unter der Kraft liegen, ab der das Risiko einer Beschädigung der Verstellkinematik vorliegt.

Der Kabelkanal 44 kann entsprechend dem Kabelkanal 42 ausgebildet sein.

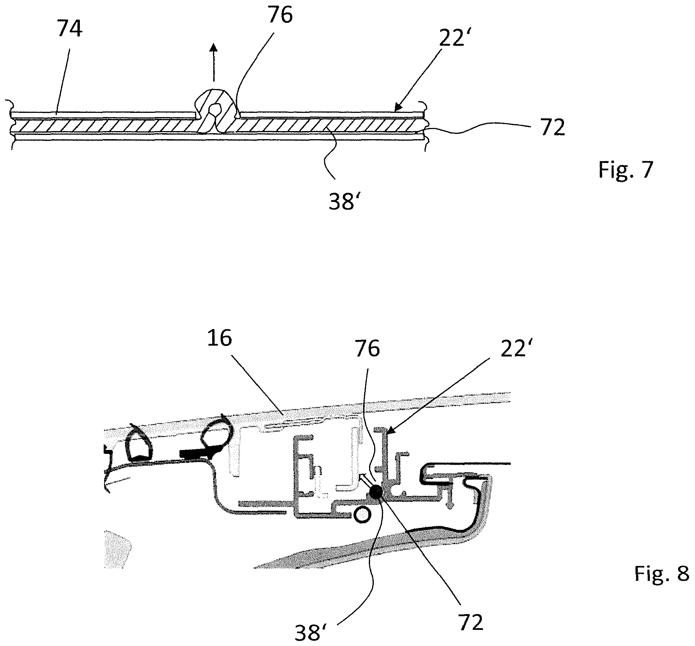

In den Figuren 7 und 8 ist eine alternative Ausführungsform des Gegenstandes der Erfindung dargestellt. Diese Ausführungsform umfasst eine Führungsschiene 22', die entsprechend der Ausführungsform nach den Figuren 1 bis 6 einen Längsholm eines Dachrahmens darstellt, der Bestandteil eines Dachöffnungssystems der in Figur 1 dargestellten Art ist. Die Führungsschiene 22' ist ein Aluminiumstrangpressprofil, in dem ein Kabelkanal 72 ausgebildet ist, welcher unter anderem von einer oberen, eine Kanalwand bildenden Rippe 74 begrenzt ist. In dem Kabelkanal 72 ist ein Antriebskabel 38' geführt, das hier als Steigungskabel mit einer Drahtumwicklung ausgebildet ist.

Die Rippe 74 hat in einem bugseitigen Abschnitt der Führungsschiene 22' eine Ausnehmung 76, welche einen Ausschlauffreischnitt für das Antriebskabel 38' darstellt und in Schienenlängsrichtung eine Länge von etwa 10 mm hat. Dies ist eine Länge, die größer ist als eine Ausschlaufgrenzlänge von 8 mm und geringer ist als eine kritische Ausschlauflänge von 10,5 mm.

Wenn ein Schiebedachdeckel 16 eines Dachöffnungssystems 18, der mittels des Antriebskabels 38' angetrieben ist, sich in einer die betreffende Dachöffnung freigebenden Öffnungsstellung befindet, kann dieser in einer Unfallsituation eine starke Beschleunigung in Richtung Fahrzeugbug erfahren. Damit wirken über einen Anstriebsschlitten, der von dem Antriebskabel 38' angetrieben wird, hohe Kräfte auf eben dieses Antriebskabel 38'. Aufgrund des Ausschlauffreischnitts 76 kann das Antriebskabel 38' aber aus dem Kabelkanal 72 ausschlaufen, was zu einem kontinuierlichen Abbau der kinetischen Energie des Schiebedachdeckels 16 führt. Der Schiebedachdeckel 16 kommt zum Stehen, wenn der Antriebsschlitten die Position des Ausschlauffreischnitts bzw. der Ausnehmung 76 erreicht hat.

### Bezugszeichenliste

- 10: Dach
- 12: Festdachabschnitt
- 14: Dachöffnung
- 16: Schiebedachdeckel
- 18: Dachöffnungsystem
- 20A, B: Verstellkinematik
- 22A, B: Führungsschiene
- 22': Führungsschiene
- 24: Dachrahmen
- 26: Rahmenvorderteil
- 28: Endstück
- 30: Anhebekulisse
- 32: Führungsabschnitt
- 34: Rast- uns Positionslasche
- 36: Schraubenöffnung
- 38A, B: Antriebskabel
- 38': Antriebskabel
- 40: Antriebsmotor
- 42: Kabelkanal
- 44: Kabelkanal
- 46: erster Wandabschnitt
- 48: erster Wandabschnitt
- 50: zweiter Wandabschnitt
- 52: erster Freischnitt
- 54: zweiter Freischnitt
- 55: Freischnitt
- 56: Dämpftrichter
- 58: Fläche
- 60: Fläche
- 72: Kabelkanal
- 74: Rippe
- 76: Ausnehmung

## Patentansprüche

1. Rahmen eines Fahrzeugdachs, umfassend ein Kabelführungselement, in dem ein Kabelkanal (42, 72) zur Aufnahme eines Antriebskabels (38A, 38B) für ein verstellbares Dachelement ausgebildet ist, der von einer Kanalwand begrenzt ist, wobei die Kanalwand einen Ausschlauffreischnitt hat, der in Längsrichtung des Kabelkanals (42) eine Länge hat, die größer ist als eine Ausschlaufgrenzlänge, **dadurch gekennzeichnet, dass** der Ausschlauffreischnitt (55) eine Länge in Längsrichtung des Kabelkanals (42, 72) hat, die geringer ist als eine kritische Ausschlauflänge die etwa 9,5 mm bis 10,5 mm beträgt, wobei die Ausschlaufgrenzlänge etwa 7,5 mm bis 8,5mm beträgt.

2. Rahmen nach Anspruch 1, **dadurch gekennzeichnet, dass** die kritische Ausschlauflänge etwa 10 mm beträgt.

3. Rahmen nach einem der Ansprüche 1 oder 2, **dadurch gekennzeichnet, dass** die Ausschlaufgrenzlänge etwa 8,0 mm beträgt.

4. Rahmen nach einem der Ansprüche 1 bis 3, **dadurch gekennzeichnet, dass** der Kabellkanal (42, 72) bei einer Projektion entlang der Kabelkanalachse einen Durchmesser von etwa 5,0 mm bis 5,5 mm hat.

5. Rahmen nach einem der Ansprüche 1 bis 4, **dadurch gekennzeichnet, dass** sich an den Ausschlauffreischnitt (55) ein Dämpftrichter (56) anschließt, dessen Querschnittsfläche sich ausgehend von dem Ausschlauffreischnitt (52) verkleinert.

6. Rahmen nach einem der Ansprüche 1 bis 5, **dadurch gekennzeichnet, dass** das Kabelführungselement eine Führungsschiene (22'), in der eine Antriebsmechanik eines Dachöffnungssystems geführt ist, ein an eine Führungsschiene angebundenes Kulissenelement, ein Rahmenquerteil, insbesondere ein Rahmenvorderteil oder ein Rahmenhinterteil, ein Rahmenlängsteil oder ein in den Rahmen integriertes Führungsrohr ist.

7. Rahmen nach einem der Ansprüche 1 bis 6, **dadurch gekennzeichnet, dass** das Kabelführungselement ein Kunststoffformteil ist, in dem der Kabelkanal (42) zur Aufnahme des Antriebskabels (38A, 38B) für das verstellbare Dachelement ausgebildet ist, wobei der Kabelkanal (42) das Antriebskabel (38A, 38B) wechselweise von einer ersten Seite mittels erster Wandabschnitte (46, 48) und von einer zweiten Seite mittels zweiter Wandabschnitte (50) führt und die ersten Wandabschnitte (46, 48) und die zweiten Wandabschnitte (50) die Kanalwand bilden, wobei die ersten Wandabschnitte (46, 48) jeweils an mindestens einen ersten Freischnitt (52) grenzen, der einem jeweiligen zweiten Wandabschnitt (50) gegenüberliegt, und die zweiten Wandabschnitte (50) jeweils an mindestens einen zweiten Freischnitt (55) grenzen, der einem jeweiligen ersten Wandabschnitt (46, 48) gegenüberliegt, und einer der Freischnitte (55) der Ausschlauffreischnitt ist, der in Längsrichtung des Kabelkanals (42) eine Länge hat, die größer ist als eine Ausschlaufgrenzlänge, und die anderen Freischnitte (52, 54) in Längsrichtung des Kabelkanals (42) eine Länge haben, die unterhalb der Ausschlaufgrenzlänge liegt.

8. Rahmen nach Anspruch 6, **dadurch gekennzeichnet, dass** die Führungsschiene (32) ein Strangpressprofil ist, in dem der Kabelkanal (72) ausgebildet ist, wobei die Kanalwand mit dem Auschlauffreischnitt von einer sich in Führungsschienenlängsrichtung erstreckenden Rippe (74) der Führungsschiene (22') gebildet ist und der Ausschlauffreischnitt durch eine Ausnehmung (76) der Rippe (74) gebildet ist.

9. Rahmen nach Anspruch 8, **dadurch gekennzeichnet, dass** die Ausnehmung (76) im Bereich einer bugseitigen Hälfte, insbesondere eines bugseitigen Drittels der Führungsschiene (22') angeordnet ist.

10. Rahmen nach Anspruch 8 oder 9, **dadurch gekennzeichnet, dass** die Führungsschiene (22') aus Aluminium gefertigt ist.

## Claims

1. A frame of a vehicle roof, comprising a cable guide element, in which a cable channel (42, 72) is realised, said cable channel serving to hold a drive cable (38A, 38B) for a displaceable roof element and being limited by a channel wall, said channel wall having a loop-out opening whose length in the longitudinal direction of the cable channel (42) is greater than a loop-out threshold length, **characterised in that** the length of the loop-out opening (55) in the longitudinal direction of the cable channel (42, 72) is less than a critical loop-out length, which is approximately 9.5 mm to 10.5 mm, said loop-out threshold length amounting to approximately 7.5 mm to 8.5 mm.

2. The frame according to claim 1, **characterised in that** the critical loop-out length amounts to approximately 10 mm.

3. The frame according to claim 1 or 2, **characterised in that** the loop-out threshold length amounts to approximately 8.0 mm.

4. The frame according to any one of the claims 1 to 3, **characterised in that** the cable channel (42, 72) has a diameter of approximately 5.0 mm to 5.5 mm when projected along the cable channel axis.

5. The frame according to any one of the claims 1 to 4, **characterised in that** the loop-out opening (55) is adjacent to a damping funnel (56) whose cross-sectional surface decreases starting from the loop-out opening (52).

6. The frame according to any one of the claims 1 to 5, **characterised in that** the cable guide element is a guide rail (22') in which a drive mechanism of a roof opening system is guided, a cam element which is connected to a guide rail, a transverse frame part, in particular a front frame part or a rear frame part, a longitudinal frame part or a guide tube integrated into the frame.

7. The frame according to any one of the claims 1 to 6, **characterised in that** the cable guide element is a moulded plastic part in which the cable channel (42) for holding the drive cable (38A, 38B) for the displaceable roof element is realised, the cable channel (42) guiding the drive cable (38A, 38B) alternately from a first side using first wall sections (46, 48) and from a second side using second wall sections (50), and the first wall sections (46, 48) and the second wall sections (50) forming the channel wall, each of the first wall sections (46, 48) being adjacent to at least one first opening (52) which is opposite to a respective second wall section (50), and each of the second wall sections (50) being adjacent to at least one second opening (55) which is opposite to a respective first wall section (46, 48), and one of the openings (55) being the loop-out opening, whose length in the longitudinal direction of the cable channel (42) is greater than a loop-out threshold length, and the lengths of the other openings (52, 54) in the longitudinal direction of the cable channel (42) being less than the loop-out threshold length.

8. The frame according to claim 6, **characterised in that** the guide rail (32) is an extruded profile in which the cable channel (72) is realised, the channel wall having the loop-out opening being formed by a rib (74) of the guide rail (22') extending in the longitudinal direction of the guide rail, and the loop-out opening being formed by a recess (76) of the rib (74).

9. The frame according to claim 8, **characterised in that** the recess (76) is disposed in the region of a front half, in particular of a front third of the guide rail (22').

10. The frame according to claim 8 or 9, **characterised in that** the guide rail (22') is made from aluminium.

## Revendications

1. Cadre d'un toit de véhicule, comprenant un élément de guidage de câbles, dans lequel un conduit de câbles (42, 72) étant réalisé, ledit conduit de câbles servant à recevoir un câble d'entraînement (38A, 38B) pour un élément de toit déplaçable et étant limité par une paroi de conduit, la paroi de conduit ayant une découpure de sortie de câble qui a une longueur, dans la direction longitudinale du conduit de câbles (42), qui est supérieure à une longueur de sortie de câble de seuil, **caractérisé en ce que** la découpure de sortie de câble (55) a une longueur, dans la direction longitudinale du conduit de câbles (42, 72), qui est inférieure à une longueur de sortie de câble critique, qui est environ 9,5 mm à 10,5 mm, ladite longueur de sortie de câble de seuil se montant à environ 7,5 mm à 8,5 mm.

2. Cadre selon la revendication 1, **caractérisé en ce que** la longueur de sortie de câble critique se monte à environ 10 mm.

3. Cadre selon la revendication 1 ou 2, **caractérisé en ce que** la longueur de sortie de câble de seuil se monte à environ 8,0 mm.

4. Cadre selon l'une quelconque des revendications 1 à 3, **caractérisé en ce que** le conduit de câbles (42, 72) a un diamètre d'environ 5,0 mm à 5,5 mm quand il est projeté le long de l'axe du conduit de câbles.

5. Cadre selon l'une quelconque des revendications 1 à 4, **caractérisé en ce qu'**un entonnoir d'affaiblissement (56) se rattache à la découpure de sortie de câble (55), la surface en section dudit entonnoir d'affaiblissement (56) se réduisant à partir de la découpure de sortie de câble (52).

6. Cadre selon l'une quelconque des revendications 1 à 5, **caractérisé en ce que** l'élément du guidage de câbles est un rail de guidage (22') dans lequel un mécanisme d'entraînement d'un système d'ouverture de toit est guidé, un élément de came qui est relié avec un rail de guidage, une pièce de cadre transverse, notamment une pièce de cadre avant ou une pièce de cadre arrière, une pièce de cadre longitudinale ou un tuyau de guidage intégré dans le cadre.

7. Cadre selon l'une quelconque des revendications 1 à 6, **caractérisé en ce que** l'élément de guidage de câbles est une pièce moulée en matière plastique dans lequel le conduit de câbles (42) pour recevoir le câble d'entraînement (38A, 38B) pour l'élément de toit déplaçable est réalisé, le conduit de câbles (42) guidant le câble d'entraînement (38A, 38B) réciproquement d'un premier côté moyennant des premières parties de paroi (46, 48) et d'un deuxième côté moyennant des deuxièmes parties de paroi (50), et les premières parties de paroi (46, 48) et les deuxièmes parties de paroi (50) formant la paroi de conduit, chacune des premières parties de paroi (46, 48) voisinant avec au moins une première découpure (52) qui est opposée à une deuxième partie de paroi (50) respective, et chacune des deuxièmes parties de paroi (50) voisinant avec au moins une deuxième découpure (55) qui est opposée à une première partie de paroi (46, 48) respective, et une parmi les découpures (55) étant la découpure de sortie de câble qui a one longueur, dans la direction longitudinale du conduit de câbles (42), qui est supérieure à une longueur de sortie de câble de seuil, et les autres découpures (52, 54) ayant une longueur, dans la direction longitudinale du conduit de câbles (42), qui est inférieure à la longueur de sortie de câble de seuil.

8. Cadre selon la revendication 6, **caractérisé en ce que** le rail de guidage (32) est un profil extrudé dans lequel le conduit de câbles (72) est réalisé, la paroi de conduit ayant la découpure de sortie de câble étant formée par un renfort (74) du rail de guidage (22') s'étendant dans la direction longitudinale du rail de guidage, et la découpure de sortie de câble étant formée par une aperture (76) du renfort (74).

9. Cadre selon la revendication 8, **caractérisé en ce que** l'aperture (76) est disposée dans la région d'une moitié avant, notamment d'un tiers avant du rail de guidage (22').

10. Cadre selon la revendication 8 ou 9, **caractérisé en ce que** le rail de guidage (22') est fabriqué à partir d'aluminium.
